# EUROPEAN PATENT SPECIFICATION

(11) **EP 1 625 787 B1**
(45) Date of publication and mention of the grant of the patent: **14.02.2007**
(21) Application number: 05107279.1
(22) Date of filing: 08.08.2005
(51) Int. Cl.: A01K 5/00

(54) **Apparatus for separating and mixing feed for livestock**
Anlage zum Trennen und Mischen von Viehfutter
Appareil pour séparer et mélanger des produits pour l'alimentation du bétail

(30) Priority: 13.08.2004 NL 1026841
(43) Date of publication of application: 15.02.2006
(73) Proprietor: Trioliet Mullos B.V., 7575 BE Oldenzaal (NL)
(72) Inventor: Liet, Cornelis, Hendricus, 7581 PJ, Losser (NL); Van der Plas, Nicolaas, 7576 WB, Oldenzaal (NL)
(74) Representative: de Vries, Johannes Hendrik Fokke

(56) References cited:
- EP-A- 0 931 454
- EP-A- 1 402 771
- DE-A1- 19 539 339
- DE-U1- 20 105 747
- FR-A- 2 837 351

## Description

The invention relates to an apparatus for separating and mixing feed for livestock, comprising at least two units for processing feed, each unit being provided with a space for receiving one or more bales of feed and reducing means for separating feed from a bale, said apparatus furthermore comprising a mixing space for mixing feed components into a feed mixture, conveying means for supplying separated feed to the mixing container, and delivery means for delivering the feed mixture from the mixing space.

An apparatus of this kind is disclosed in DE-A-195 39 339. Said known apparatus comprises two units for processing feed disposed on either side of the central mixing space, the reducing means being embodied as a metering roller that coacts with a conveyor disposed above the metering roller for the metered supply of feed to the mixing space. In the mixing space, the amounts of feed being supplied from either side are mixed and delivered as a feed mixture by delivery means in the form of a transverse conveyor. Said known apparatus has several drawbacks. Since the units for processing feed are disposed on either side of a central mixing space, the apparatus can comprise maximally two units. The use of a metering roller for the metered supply of the separated feed requires a relatively high driving power. An adequate mixing of the amounts of feed and any other feed components being supplied does not take place in the mixing space of said known apparatus. The user is capable of influencing the amounts being supplied by varying the rotational speed of the metering rollers and/or the conveying velocity of the conveying means of the unit, but in practice it is not easy to realise a desired composition of the feed mixture with sufficient precision.

EP-A-1 402 771 discloses an apparatus for separating and mixing feed for livestock, wherein two units for processing feed are disposed beside each other. The feed is detached from a bale of feed by reducing means and delivered to the livestock via a transverse conveyor. Said known apparatus does not comprise a mixing space for mixing several feed components. The known apparatus is provided with weighing means, which enable the user of the apparatus to realise a desired ratio of the various feed components being delivered by the delivery means.

EP-B-0 931 454 discloses an apparatus for the comminution and mixing of feedstuff components for livestock that forms part of a feeding system, which apparatus is embodied as a feed mixing carriage that forms part of a feeding system comprising storage hoppers for various feed components. The feed mixing carriage is configured with weighing means, which, in combination with a control unit, make it possible to form a desired amount of feed mixture of a desired composition. The carriage is configured with a mixing element for mixing the components to obtain the desired feed mixture. The drawback of said known apparatus is that the feed components must be stored in the form of comminuted feed in the storage bunkers. This leads to a comparatively rapid quality decrease of the feed.

The object of the invention is to provide an apparatus of the kind referred to in the introduction, which overcomes the drawbacks of the known apparatuses in a simple but nevertheless effective manner.

In order to accomplish that object, the apparatus is according to the invention characterized in that each reducing means is arranged for separating and discharging feed from one side of a bale of feed, and in that the mixing space forms part of a mixing container configured with a driveable mixing element, wherein weighing means are provided for weighing the amount of feed that has been supplied to the mixing container, and wherein a programmable control unit is provided, which control unit comprises input means for inputting a desired amount and composition of the feed mixture and which is capable of controlling each reducing means independently for separating an amount of feed from a bale of feed in dependence on the desired amount and composition of the feed mixture and the amount of feed as weighed by the weighing means that has been supplied to the mixing container.

The apparatus according to the invention makes use of a reducing means that separates the feed from one side, preferably the upper side, of the bale of feed and discharges said feed. Such a reducing means is also referred to as top unloader, an important advantage of which is that the required driving power is relatively low. Since the mixing space forms part of a mixing container configured with a driveable mixing element, an adequate mixing of the various components to obtain a uniform feed mixture is ensured. The weighing means and the control unit make it possible to obtain a desired amount and composition of the feed mixture in a fully automated manner. The apparatus is capable of dispensing a desired amount of feed mixture of a desired composition to groups of livestock without the interference of an operator being required. The user of the apparatus only needs to place bales of feed in the various units at regular intervals. The bales will retain their quality for a prolonged period of time after being placed in the units. In addition, the system of processing bales of feed makes it possible to use a compact construction for the apparatus. Since the units are placed beside each other, it is possible to dispose two, three or more units side by side.

According to an advantageous embodiment, at least one unit for processing feed furthermore comprises one or more of containers for other feed products, which are disposed above a conveyor, wherein each container comprises a delivery element for delivering the feed product to the conveyor, and wherein each delivery element is operated by the control unit. This achieves that the apparatus is capable of producing feed mixtures of a highly varied composition that can be selected in dependence on the group of livestock that is to be fed.

According to the invention, the entire apparatus may be mobile, in which case the mixing container and the associated delivery element are integral with the apparatus. Alternatively, the mixing container may be embodied as a separate, mobile mixing carriage comprising means for driving the delivery element, the mixing element and possibly for moving the carriage. The other part of the apparatus may be disposed at a suitable fixed location in that case, and the feed alley only needs to have a limited width for the mixing carriage.

The invention will now be explained in more detail with reference to the drawing, which schematically shows a few embodiments of the apparatus according to the invention.

Fig. 1 is a perspective view of a first embodiment of the apparatus according to the invention, in which the apparatus is embodied as one mobile unit.

Fig. 2 is a schematic top plan view of the apparatus of Fig. 1.

Fig. 3 is a schematic sectional view along the line III-III in Fig. 2.

Fig. 4 is a schematic sectional view along the line IV-IV in Fig. 2.

Fig. 5 is a schematic sectional view along the line V-V in Fig. 2.

Fig. 6 is a sectional view corresponding to Fig. 4 of a second embodiment of the apparatus according to the invention, in which the mixing container is embodied as a separate mobile mixing carriage.

Figs. 7 and 8 are schematic views of the mixing carriage of Fig. 6.

Fig. 9 is a schematic top plan view of a third embodiment of the apparatus according to the invention.

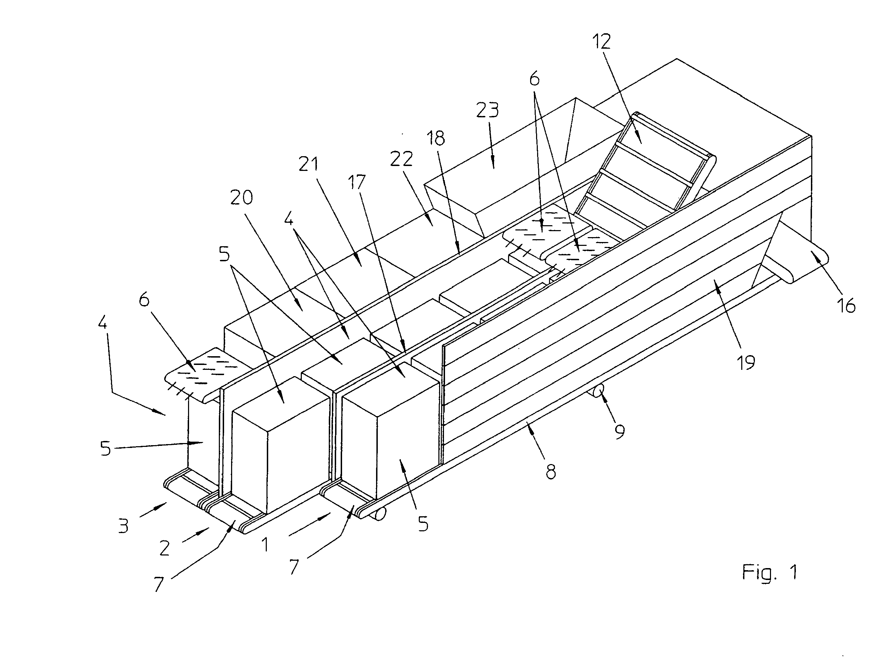

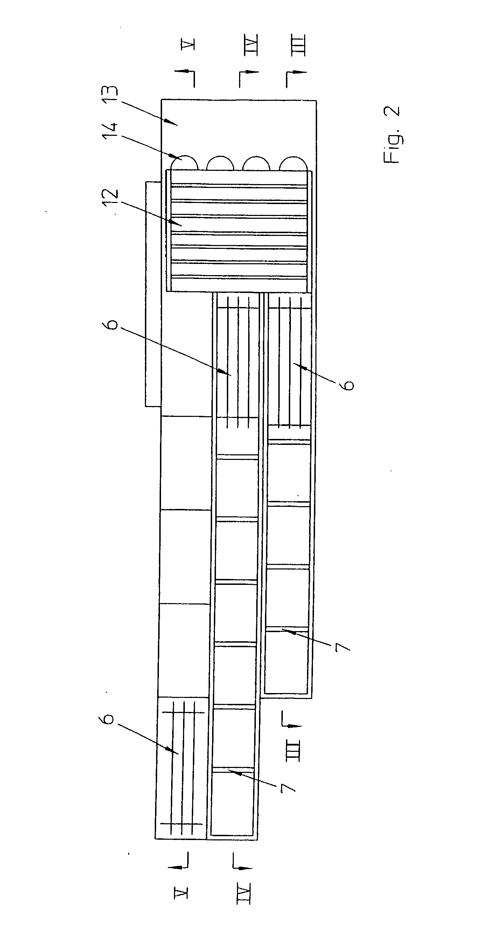

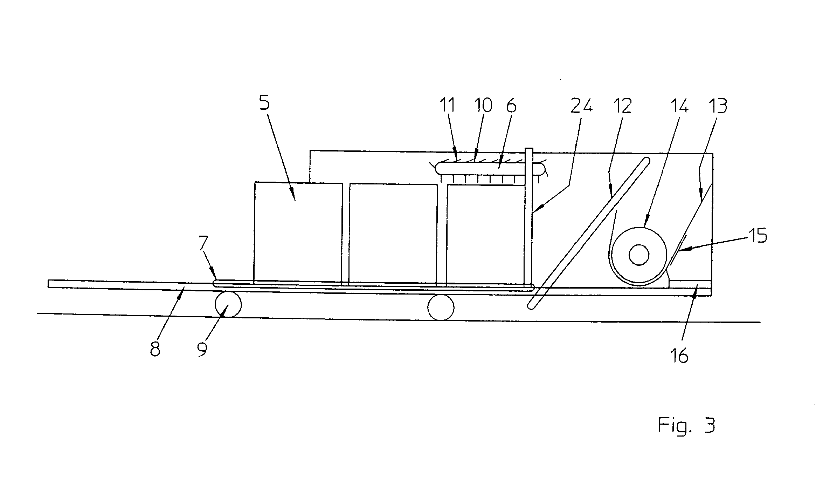

Figs. 1 and 2 show an apparatus for separating (loosening) and mixing feedstuff for livestock, which comprises three units 1,2,3 for processing feed. Feed for livestock can comprise roughage, such as bales of grass, maize, straw and the like, and other feed components, such as potatoes, draff, pulp, concentrates, etc. As is shown in the drawing, bales may be rectangular in shape, but the apparatus is also suitable for handling round bales or bales having other shapes, of course. Each unit 1-3 comprises a space 4 for receiving one or more bales of roughage 5, a reducing means 6 for separating feed from a bale and a conveyor 7 for supplying a bale of feed to the reducing means 6. The space 4 of the unit 3 may have a fixed bottom, in which case the conveyor begins after the space 4 and only functions to transport the separated feed and other feed components, as will be discussed in more detail yet. The various units 1-3 are shown in longitudinal section in Figs. 3, 4 and 5. The units 1-3 are supported on a (very schematically shown) chassis 8, which is provided with wheels 9, so that the entire apparatus is mobile.

The first unit 1 may be used for maize feed bales 5, for example, which are transported to the reducing means 6 by the conveyor 7. The reducing means 6 is embodied as a top unloader. The advantage of such a top unloader is that only a relatively low driving power is needed. In the drawing, the top unloader is shown by way of example to comprise an endless belt 10 provided with projecting pins 11, which separate the roughage from the upper side of the bale 5 and discharge it to a vertical conveyor 12. It is also possible to use a different type of top unloader, of course. It is noted that it is important that the reducing means 6 separates feed in layers from the bale from one side of the bale, preferably the upper side. If desired, it is possible to separate feed from a side other than the upper side.

As Fig. 1 shows, said vertical conveyor 12 extends the entire width of the apparatus, so that the vertical conveyor receives the separated feed and/or any other feed components from the unit 1-3 in question and transports the same in upward direction. It is also possible to use a separate vertical conveyor 12 for each individual unit 1-3, if desired. In the embodiment that is shown in the drawing, the vertical conveyor 12 is embodied as a belt conveyor, but it may also be embodied as, for example, a mainly vertical screw conveyor or the like.

After the vertical conveyor 12 comes a mixing container 13, in which a driveable mixing element 14 is disposed for mixing the feed components that are deposited into the mixing container 13. In the apparatus that is shown in Figs. 1-5, the mixing container 13 is supported on the chassis 8 of the apparatus. An outlet opening (not shown) is present in a side wall of the mixing container 13, which opening is closed by a flap 15. Once the feed components are sufficiently mixed, the flap 15 can be opened and the feedstuff is delivered to a discharge conveyor 16, which can deliver the feed mixture to the livestock on the left-hand side or the righthand side of the apparatus.

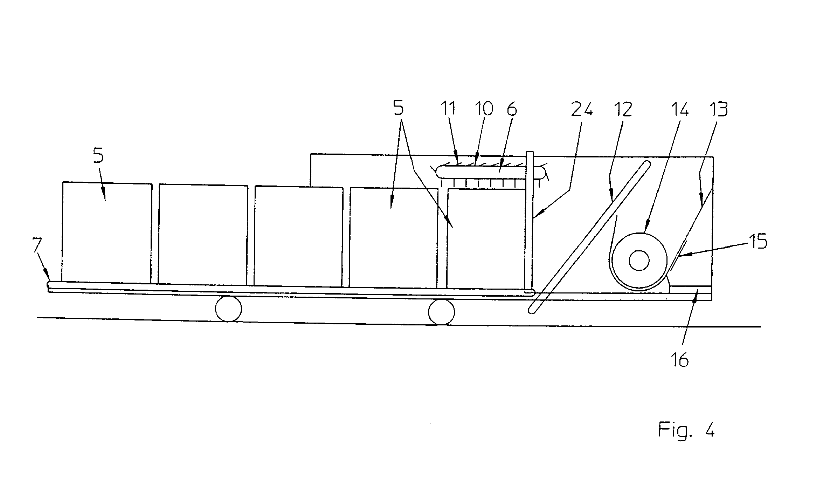

Fig. 4 is a sectional view of the second unit 2, which in this case is filled with bales 5 of silage grass. As is apparent from Figs. 1, 3 and 4, the length of the unit 2 is greater than the length of the unit 1, so that more bales 5 can be placed in the unit 2 than in the unit 1. Moreover, this makes it easier to fill the unit 2 from the longitudinal side of the apparatus. As Fig. 1 shows, a wall 17 is disposed between the units 1 and 2, whilst a wall 18 is disposed between the units 2 and 3. A wall 19 is furthermore provided at the outer side the unit 1, and also the unit 3 may be provided with such a wall, if desired.

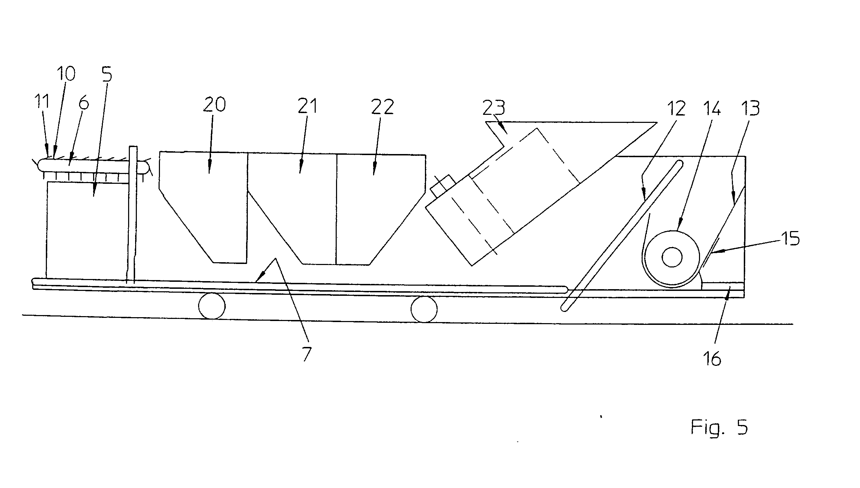

Fig. 5 shows a sectional view of the unit 3, from which it appears that said unit comprises a space for receiving one bale 5 of feed on the left-hand side of the unit 3, seen in the top plan view of Fig. 2, above which space a top unloader 6 is positioned. This configuration enables the apparatus to process three different kinds and/or qualities of roughage. Several containers 20, 21, 22 and 23 for feed products are arranged between the location of the top unloader 6 and the vertical conveyor 12. The containers 20-22 are intended for receiving feed products other than roughage, for example potatoes, draff, pulp, concentrates and the like. The container 23 has been devised to receive bales of straw, but it is also possible to place bales of a different type of feed in said container. Each container 20-23 is configured with a delivery element, which enables the metered delivery of the feed product in question to the conveyor 7 of the unit 3. The container 23 may also be configured with means for turning the bale of fodder that is present in the container. The conveyor 7 supplies the fodder that has been separated from the bales 5 by the top unloader 6 and the feed product that has been delivered from one or more of the containers 20-23 to the vertical conveyor 12, which delivers the feed product to the mixing container 13. It is noted that the unit 3 may be configured not to comprise a receiving space for a bale of fodder, if desired.

It will be understood that the configuration of the apparatus that comprises three units 1-3 arranged side by side, with the unit 3 being adapted to handle different feed products, makes it possible to prepare varying mixtures of feed products in the mixing container 13.

The apparatus as described herein is provided with a programmable control unit (not shown) configured with input means in the form of a keyboard, a touchscreen or the like, via which a desired amount and composition of the feed mixture in the mixing container 13 can be input. The control unit is connected to the conveyors 7 of the units 1-3, the top unloaders 6, the delivery elements of the containers 20-23 and the vertical conveyor 16 by means that are known per se, so that the control unit can determine the various amounts of feed to be supplied to the mixing container 13. Weighing means are furthermore provided for weighing the amount of feed that is supplied to the mixing container 13. Said weighing means may comprise sensors that measure the weight of the feed in the mixing container 13, for example, or sensors that measure the weight of the feed in the various units 1-3. In this way the control unit is capable of controlling the top unloaders 6 and the delivery elements of the containers 20-23 entirely automatically to supply the desired amount of the various feed products to the mixing container 13.

In the illustrated embodiment, the top unloaders 6 are mounted to a substantially vertical frame 24, and the top unloader 6 can move down along the frame 24 as more feed is separated from the upper side of the bale of feed 5. The top unloader 6 scrapes the feed off the upper side of the bale and supplies the separated feed to the mixing container 13. In the illustrated embodiment, the top unloader 6 to that end deposits the feed that has been scraped off on the vertical conveyor 12 in the case of the units 1 and 2 and on the conveyor 7 in the case of the unit 3.

Alternatively, the top unloader may deposit the fodder directly into the mixing container 13 in the case of the units 1 and 2, so that the vertical conveyor 12 can be left out. This makes it possible to reduce the length of the apparatus or to increase the capacity of the units 1 and 2 without adding to the length of the apparatus. In this embodiment, the top unloader 6 is fixedly connected to the frame 24, whilst means are provided that move the bale 5 that is present under the top unloader 6 gradually upwards.

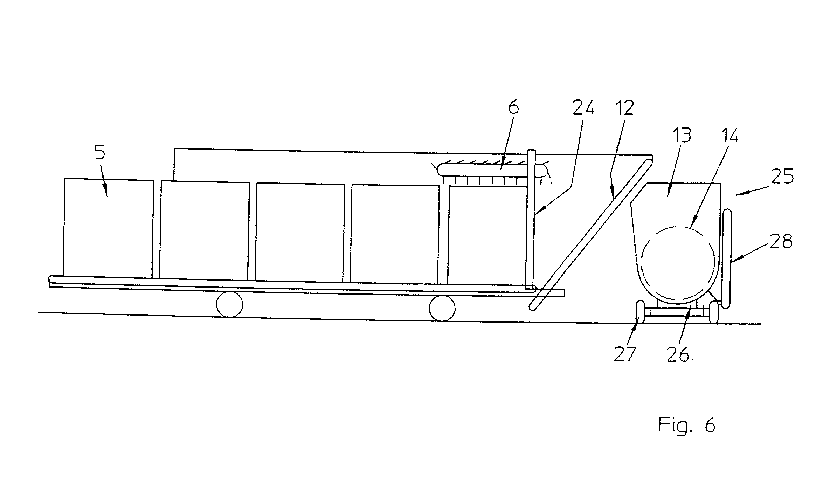

Fig. 6 is a sectional view corresponding to Fig. 4 of a second embodiment of the apparatus according to the invention, which is of substantially the same construction as the embodiment that is shown in Figs. 1-5. In the embodiment of Fig. 6, the mixing container is embodied as a separate, mobile mixing carriage 25 comprising a chassis 26 with wheels 27. In this case the apparatus being described may be embodied as a stationary apparatus, in which the mixing carriage is placed in the position that is shown in Fig. 6 relative to the apparatus for filling the mixing carriage with the various desired feed components. The mixing carriage comprises a control unit (not shown) and driving means, which driving means may comprise one or more electric motors. The mixing carriage 25 also comprises the required batteries, of course. The charging of the batteries can take place in a special charging station or at the stationary apparatus. If desired, it is also possible to use an external drive unit for the mixing element, to which the mixing element can be connected during a mixing phase. It is also possible to connect the drive unit to the electric mains for the mixing operation, so that the energy required for a mixing the feed products can be directly taken from the electric mains. Sad connection to the electric mains can be effected when the mixing carriage 25 is present at the location of the apparatus or at another suitable location.

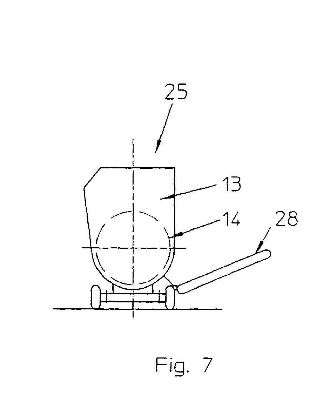

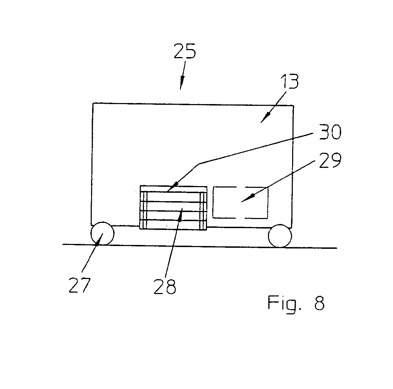

Present on one side or on both sides of the mixing carriage 25 is a collapsible discharge conveyor 28, by means of which the feed mixture can be delivered to the livestock. Fig. 7 shows the conveyor 28 in the delivery position. To deliver a feed mixture, a flap 29 (schematically represented in Fig. 8) is opened, as a result of which a delivery opening 30 is released, via which a feed mixture is delivered to the discharge conveyor 28. While this takes place, the mixing element 14 is driven slowly for discharging the feed mixture from the mixing space, with the power required for driving the drive unit being obtained from the battery.

The advantage of using a separate, mobile mixing carriage 25 is that a relatively narrow feed alley suffices.

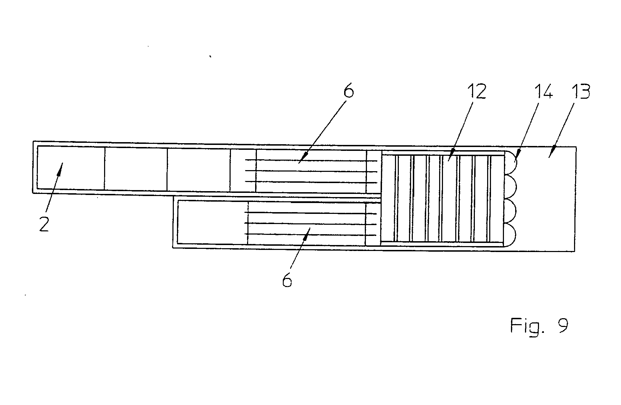

Fig. 9 is a very schematic representation of a third embodiment of the apparatus according to the invention, which comprises two units 1 and 2 arranged side by side for receiving bales of feed. For the rest, this apparatus is configured in the same manner as the apparatus that is shown in Figs. 1-5, comprising a mixing container that is mounted on the mobile chassis 8 of the apparatus. Of course it is also possible to use a separate, mobile mixing carriage 25 in this case. Furthermore it is possible to configure one of the units 1,2 in the same manner as the units 3 with various containers 20-23.

The invention is not limited to the embodiments as described above, which can be varied in various ways within the scope of the invention as defined in the claims.

## Claims

1. An apparatus for separating and mixing feed for livestock, comprising at least two units (1,2,3) for processing feed, each unit (1,2,3) being provided with a space for receiving one or more bales (5) of feed and reducing means (6) for separating feed from a bale (5) said apparatus furthermore comprising a mixing space (4) for mixing feed components into a feed mixture, conveying means for supplying separated feed to the mixing container (13) and delivery means for delivering the feed mixture from the mixing space, **characterized in that** each reducing means is arranged for separating and discharging feed from one side of a bale of feed (5) and **in that** the mixing space (4) forms part of a mixing container (13) configured with a driveable mixing element (14), wherein weighing means are provided for weighing the amount of feed that has been supplied to the mixing container, and wherein a programmable control unit is provided, which control unit comprises input means for inputting a desired amount and composition of the feed mixture and which is capable of controlling each reducing means independently for separating an amount of feed from a bale of feed in dependence on the desired amount and composition of the feed mixture and the amount of feed as weighed by the weighing means that has been supplied to the mixing container (13).

2. An apparatus according to claim 1, wherein at least one unit (1,2,3) for processing feed furthermore comprises one or more containers (20,21,22) for other feed products, which are disposed above a conveyor, wherein each container comprises a delivery element for delivering the feed product to the conveyor 7, and wherein each delivery element is operated by the control unit.

3. An apparatus according to claim 1 or 2, wherein two or more units for processing feed have different lengths.

4. An apparatus according to any one of the preceding claims, wherein a vertical conveyor (12) is provided for each unit for processing feed, which conveyor functions to supply feed to the mixing container (13), each unit being configured with a conveyor for supplying a bale of feed to the reducing means or feed to the vertical conveyor.

5. An apparatus according to claim 4, wherein the processing means can move up and down with respect to the conveyor (7).

6. An apparatus according to claim 1, 2 or 3, wherein the reducing means (6) of one or more units for processing feed is capable of delivering feed directly to the mixing container (13).

7. An apparatus according to claim 6, wherein means for elevating a bale of feed are provided at the location of the reducing means (6).

8. An apparatus according to any one of the preceding claims, wherein the entire apparatus is mobile.

9. An apparatus according to any one of the preceding claims, wherein the mixing container (13) is embodied as a separate mobile mixing carriage configured with means for driving the delivery means, the mixing element (13) and possibly for moving the carriage.

10. An apparatus according to claim 9, wherein the mixing carriage comprises a second control unit, which can be connected to the control unit of the apparatus, wherein the second control unit controls the means for driving the delivery means, the mixing element (13) and possibly for moving the carriage.

11. An apparatus according to claim 9 or 10, wherein the mixing carriage comprises a power source for the driving means, wherein the mixing carriage and the driving means for the mixing element can be connected to the electric mains.

12. An apparatus according to any one of the preceding claims, wherein partitions are mounted between the units.

## Patentansprüche

1. Vorrichtung zum Trennen und Mischen von Viehfutter, die wenigstens zwei Einheiten (1,2,3) für Futterverarbeitung umfasst, wobei jede Einheit (1, 2, 3) mit einem Raum zum Aufnehmen von einem Futterballen oder von mehreren Futterballen (5) und einer Reduziereinrichtung (6) zum Abtrennen von Futter von einem Ballen (5) versehen ist, wobei die Vorrichtung des Weiteren einen Mischraum (4) zum Mischen von Futtermitteln in eine Futtermischung, Fördereinrichtungen zum Fördern des abgetrennten Futters in den Mischbehälter (13) und Zuführeinrichtungen zum Zuführen der Futtermischung aus dem Futterraum umfasst, **dadurch gekennzeichnet, dass** jede der Reduziereinrichtungen zum Abtrennen und Abführen von Futter von einer Seite des Ballens (5) eingerichtet ist und dass der Mischraum (4) Teil eines mit einem antriebsfähigen Mischelement (14) konfigurierten Mischbehälters (13) ist, wobei Wiegeeinrichturtgen zum Wiegen der Futtermenge, die dem Mischbehälter zugeführt wurde, bereitgestellt sind und wobei eine programmierbare Steuereinheit bereitgestellt ist, die eine Eingabeeinrichtung zum Eingeben einer Soll-Menge und einer Soll-Zusammensetzung der Futtermischung umfasst und die in der Lage ist, jede Reduziereinrichtung zum Abtrennen einer Futtermenge von einem Futterballen in Abhängigkeit von der Soll-Menge und der Soll-Zusammensetzung der Futtermischung und der Futtermenge, wie durch die Wiegeeinrichtungen gewogen, die dem Mischbehälter (13) zugeführt wurde, zu steuern.

2. Vorrichtung nach Anspruch 1, wobei wenigstens eine Einheit (1, 2, 3) für Futterverarbeitung des Weiteren einen Behälter oder mehrere Behälter (20, 21, 22) für andere Futterprodukte umfasst, der bzw. die über einer Förderanlage angeordnet ist bzw. sind, wobei jeder Behälter ein Zuführelement zum Zuführen des Futterproduktes zu der Förderanlage (7) umfasst und wobei jedes Zuführelement durch die Steuereinheit betätigt wird.

3. Vorrichtung nach Anspruch 1 oder 2, wobei die zwei oder mehr Einheiten für Futterverarbeitung verschiedene Längen haben.

4. Vorrichtung nach einem der vorhergehenden Ansprüche, wobei für jede der Einheiten für Futterverarbeitung ein Senkrecht-Förderer (12) bereitgestellt ist, der arbeitet, um das Futter in den Mischbehälter zu fördern, und jede Einheit mit einem Förderer zum Zuführen eines Futterballens zu der Reduziereinrichtung oder von Futter zu dem Senkrecht-Förderer konfiguriert ist.

5. Vorrichtung nach Anspruch 4, wobei sich die Verarbeitungseinrichtung in Bezug auf den Förderer (3) auf und ab bewegen kann.

6. Vorrichtung nach Anspruch 1, 2 oder 3, wobei die Reduziereinrichtung (6) einer Einheit oder mehrerer Einheiten für Futterverarbeitung in der Lage ist, das Futter direkt in den Mischbehälter (13) bringen.

7. Vorrichtung nach Anspruch 6, wobei an dem Standort der Reduziereinrichtung (6) Mittel zum Heben eines Futterballens bereitgestellt sind.

8. Vorrichtung nach einem der vorhergehenden Ansprüche, wobei die gesamte Vorrichtung ortsveränderlich ist.

9. Vorrichtung nach einem der vorhergehenden Ansprüche, wobei der Mischbehälter (13) als ein fahrbarer Mischwagen ausgeführt ist, der mit Einrichtungen zum Antreiben der Zuführeinrichtung, des Mischelements (13) und möglicherweise zum Bewegen des Wagens konfiguriert ist.

10. Vorrichtung nach Anspruch 9, wobei der Mischwagen eine zweite Steuereinheit, die an die Steuereinheit der Vorrichtung angeschlossen werden kann, umfasst, wobei die zweite Steuereinheit die Einrichtungen zum Antreiben der Zuführeinrichtung, des Mischelements (13) und möglicherweise zum Bewegen des Wagens steuert.

11. Vorrichtung nach Anspruch 9 oder 10, wobei der Mischwagen eine Leistungsquelle für die Antriebvorrichtungen umfasst und wobei der Mischwagen und die Antriebseinrichtung für das Mischelement an die elektrische Einrichtung angeschlossen werden können.

12. Vorrichtung nach einem der vorhergehenden Ansprüche, wobei zwischen den Einheiten Abtrennungen befestigt sind.

## Revendications

1. Appareil pour séparer et mélanger l'alimentation pour le bétail, comprenant au moins deux unités (1, 2, 3) pour traiter l'alimentation, chaque unité (1, 2, 3) étant prévue avec un espace pour recevoir une ou plusieurs balles (5) d'alimentation et des moyens de réduction (6) pour séparer l'alimentation d'une balle (5), ledit appareil comprenant en outre un espace de mélange (4) pour mélanger les composants alimentaires dans un mélange d'alimentation, des moyens de transport pour alimenter l'alimentation séparée au récipient de mélange (13) et des moyens de livraison pour délivrer le mélange d'alimentation à partir de l'espace de mélange, **caractérisé en ce que** chaque moyen de réduction est agencé pour séparer et décharger l'alimentation d'un côté d'une balle d'alimentation (5) et **en ce que** l'espace de mélange (4) fait partie d'un récipient de mélange (13) configuré avec un élément de mélange pouvant être entraîné (14), dans lequel on prévoit des moyens de pesée pour peser la quantité d'alimentation qui a été amenée au récipient de mélange, et dans lequel on prévoit une unité de commande programmable, laquelle unité de commande comprend des moyens d'entrée pour entrer une quantité et une composition souhaitées du mélange d'alimentation et qui est capable de contrôler chaque moyen de réduction indépendamment pour séparer une quantité d'alimentation d'une balle d'alimentation en fonction de la quantité de la composition souhaitée du mélange d'alimentation et de la quantité d'alimentation telle que pesée par les moyens de pesée qui a été amenée au récipient de mélange (13).

2. Appareil selon la revendication 1, dans lequel au moins une unité (1, 2, 3) pour traiter la nourriture comprend en outre un ou plusieurs récipients (20, 21, 22) pour d'autres produits alimentaires, qui sont disposés au-dessus d'un convoyeur, dans lequel chaque récipient comprend un élément de livraison pour délivrer le produit alimentaire au convoyeur (7), et dans lequel chaque élément de livraison est actionné par l'unité de commande.

3. Appareil selon la revendication 1 ou 2, dans lequel deux unités ou plus pour traiter la nourriture ont des longueurs différentes.

4. Appareil selon l'une quelconque des revendications précédentes, dans lequel on prévoit un convoyeur vertical (12) pour chaque unité pour traiter la nourriture, chaque convoyeur fonctionne pour amener la nourriture au récipient de mélange (13), chaque unité étant configurée avec un convoyeur pour amener une balle d'alimentation aux moyens de réduction ou l'alimentation au convoyeur vertical.

5. Appareil selon la revendication 4, dans lequel les moyens de traitement peuvent monter et descendre par rapport au convoyeur (7).

6. Appareil selon la revendication 1, 2 ou 3, dans lequel les moyens de réduction (6) d'une ou de plusieurs unités pour traiter l'alimentation sont capables de délivrer la nourriture directement au récipient de mélange (13).

7. Appareil selon la revendication 6, dans lequel les moyens pour élever une balle de nourriture sont prévus à l'emplacement des moyens de réduction (6).

8. Appareil selon l'une quelconque des revendications précédentes, dans lequel tout l'appareil est mobile.

9. Appareil selon l'une quelconque des revendications précédentes, dans lequel le récipient de mélange (13) est mis en oeuvre comme un chariot de mélange mobile séparé configuré avec des moyens pour entraîner les moyens de livraison, les moyens de mélange (13) et éventuellement pour déplacer le chariot.

10. Appareil selon la revendication 9, dans lequel le chariot de mélange comprend une seconde unité de commande, qui peut être raccordée à l'unité de commande de l'appareil, dans lequel la seconde unité de commande contrôle les moyens pour entraîner les moyens de livraison, l'élément de mélange (13), et éventuellement pour déplacer le chariot.

11. Appareil selon la revendication 9 ou 10, dans lequel le chariot de mélange comprend une source de puissance pour les moyens d'entraînement, dans lequel le chariot de mélange et les moyens d'entraînement pour l'élément de mélange peuvent être raccordés au réseau électrique.

12. Appareil selon l'une quelconque des revendications précédentes, dans lequel des cloisons sont montées entre les unités.
